# EUROPEAN PATENT SPECIFICATION

(11) **EP 0 710 450 B1**
(45) Date of publication and mention of the grant of the patent: **04.04.2001**
(21) Application number: 95202912.2
(22) Date of filing: 27.10.1995
(51) Int. Cl.: A23L 2/04, A23L 2/08, A23L 2/10

(54) **Method and installation respectively for the extraction of vegetable juices from vegetable residue and/or from vegetable remnants residue**
Verfahren und Vorrichtung zur Extraktion von Gemüsesäften aus Gemüseabfällen
Procédé et installation pour l'extraction de jus de légumes à partir de résidus de légumes

(30) Priority: 02.11.1994 NL 9401824
(43) Date of publication of application: 08.05.1996
(73) Proprietor: PROVALOR B.V., 1645 RA Ursum (NL)
(72) Inventor: Nell, Pieter Coenraad, 1645 VJ Ursum (NL)
(74) Representative: Merkelbach, B.

(56) References cited:
- FR-A- 2 580 472
- FR-A- 2 638 333
- US-A- 3 787 589
- US-E- R E18 542

## Description

The invention relates to a method and an installation respectively for the extraction of vegetable juices from vegetable peelings, whether processed or not, or similar vegetable juices containing vegetable remnants.
During industrial processing of vegetables into e.g. vegetable preserves, frozen vegetables and so on, such as is carried out with carrots and turnips, quite a lot of vegetable wastes are produced after rinsing and peeling, in the form of vegetable peelings such as e.g. carrot and/or turnip peelings (usually called pulp), which are not considered to be usefull for human consumption. Normally this vegetable wastes are not only thrown away or used as fodder, but also the costs of removing, resulting from environmental legislation, this rapidly fermenting vegetable pulp, are relatively high. Analysis of those remnants shows that this vegetable waste/fodder still contains a considerable quantity of extractable vegetable juices which would otherwise be suitable for human consumption. Research however shows that the dry matter content of said pulp is not higher than approx. 10%, which means that the remaining 90% consists of moisture. The invention relates to a method and an installation respectively for extracting a vegetable juice from these aforementioned vegetable peelings (pulp), yet suitable for human consumption.

It is clear that if e.g. 20,000 tons of pulp, obtained by (steam)peeling of e.g. carrots or from other similar products (turnip, cabbage), are annually processed, a considerable quantity of carrot juices and/or other vegetable juices respectively, may yet be obtained which up to now are disposed of and thus wasted.

According to the invention, however and most surprisingly, it turned out yet to be possible by overextracting to obtain a juice most suitable for human consumption from those carrot (steam) peelings. The extraction takes place by separating the juice from the vegetable residue by means of squeezing and/or decantation and/or centrifugation and/or similar separation techniques, known per se. By appropriate adjustment of a separator a surprisingly high percentage of vegetable juice, amazingly well suitable for human consumption, can so be extracted from the pulp. The remainder is a residual product with a remarkably and surprisingly high dry matter content, which is now most suitable and useful as fodder.

According to the invention, the method for extracting vegetable juices, particularly from vegetable peelings, whether pretreated or not, or similar vegetable juice containing vegetable remnants (pulp), with a relatively low dry matter content, e.g. less than approx 10% and a high vegetable juice content, many times larger consists of the following processing stages:
a. grinding and/or shredding (if required) the vegetable remnants and/or separated vegetable pulp parts with a low dry matter content;
b. adding (if required) pH reducing additives to the vegetable pulp parts;
c. separating the juice from the residue, particularly the residue obtained by steam-peeling vegetables. The separation can be effected by means of a so-called squeezing and/or decantation and/or centrifugation unit and/or similar separation techniques. This will produce an exceptionally high juice yield, with high quality vegetable juices.;
d. removal (if required) of sand elements and/or other impurities as residual components from the vegetable juice;
e. dosing one or more additives;
f. conditioning the obtained vegetable juice and/or the juice containing vegetable remnants, consisting of pasteurization and/or pH reduction;
g. bottling and/or deepfreezing and/or bulk packaging the vegetable juice obtained;
h. removing the residual product, with a relatively high dry matter content, which has been obtained during the separation stage.

Furthermore the invention relates to an installation for carrying out the method as described above. This installation comprises a combination of a number of consecutive processing stations, which (possibly) could consist of:
a. [if the coarseness of the residue supplied should make this advisable,] first mechanical means for refining/reducing, e.g. by means of grinding and/or shredding the vegetable juice containing vegetable remnants or the vegetable pulp parts with low dry matter content;
b. second mechanical means, such as a metering pump, for a first addition of pH reducing additives;
c. third mechanical means for separating the juice from the residue (pulp) to extract the vegetable juices;
d. [if the composition of the juice obtained should make this advisable,] fourth mechanical means for removing sand or other impurities as residual components from the vegetable juice;
e. fifth mechanical means for conditioning the squeezed out vegetable juice and/or the juice containing vegetable remnants, consisting of pasteurization and/or standardization of the pH in the juice and mechanical means for adding additives;
f. sixth mechanical means for bottling and/or deepfreezing and/or bulk packaging of the vegetable juice obtained;
g. seventh mechanical means for removing the dry residual product which has been obtained during the separation stage.

According to the invention, first mechanical means are constituted by a grinding and/or shredding unit known per se, if the fineness of the residue supplied should make this advisable.
According to the invention, second mechanical means comprises a device for the first addition of pH reducing additives to the vegetable residue.
According to the invention, third mechanical means are provided for separating the vegetable juice from the vegetable residue by means of techniques known per se, such as squeezing and/or decantation and/or centrifugation and the like.
According to the invention, fourth mechanical means consist of means, known per se, to remove sand elements or other undesired residual components from the vegetable juice, e.g. by means of a sand and/or dirt cyclone, if the composition of the juice obtained should make this advisable.
According to the invention, fifth mechanical means are provided for the conditioning of the vegetable juice and/or the juice containing vegetable remnants which have been separated out, these means consisting of pasteurization and/or pH reduction and/or sixth mechanical means for the addition of other additives;
According to the invention, seventh mechanical means provided with the installation are used to bottle and/or deepfreeze and/or bulk package the vegetable juice obtained.
According to the invention, eighth mechanical means are provided for the removal of the residual product with a relatively high dry matter content, which is obtained during the separation stage.

Below, the invention will be explained further by means of a drawing of an inventive embodiment.
Figure 1 shows in a block diagram several processing stages in the processing of carrot steam peelings, as an example of vegetable remnants, into a carrot juice suitable for human consumption;
Figure 2 shows a diagram of an installation according to the invention, indicating the separate processing stations.

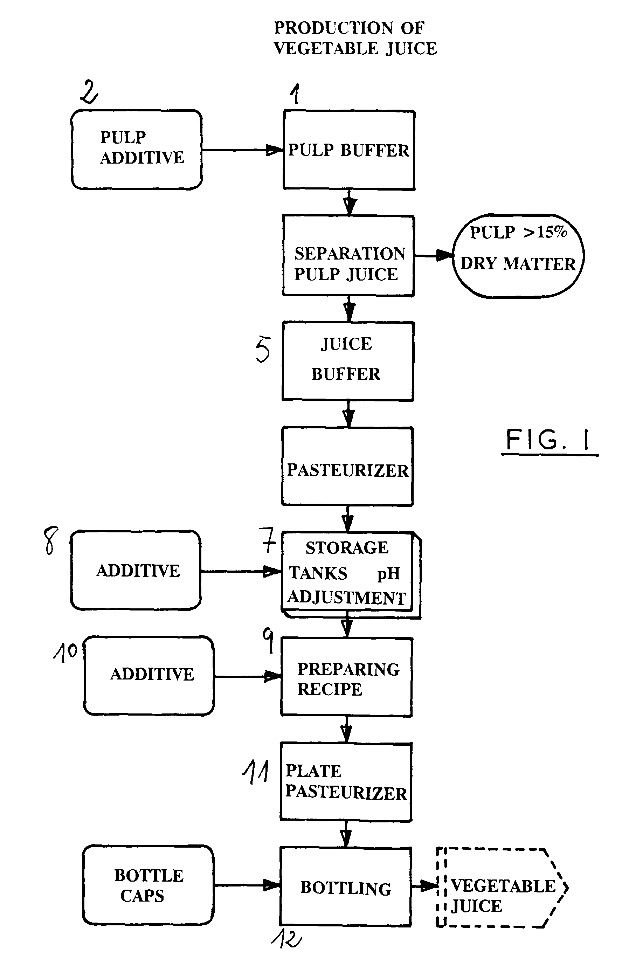

Figure 1 shows a diagram of the production process of a carrot juice from carrot remnants. The carrot steam peelings are acidulated in pulp buffer tank 1 by means of an additive from dose measuring device 2, which prevents fermentation. In a separation unit the pulp is subsequently separated into vegetable juice and residual product having a dry matter content of approx. 15% or more. The residual product ends up in pulp container 4, while the vegetable juice obtained is collected in juice buffer tank 5, after sand elements and/or other impurities, if any, have been removed.
The vegetable juice is then fed through a plate pasteurizer, whereupon in storage tank 7 an acid solution is dosed from dose measuring device 8, which brings the pH of the carrot juice upon the desired value. To meet the desired taste need of the user, a sweetener and/or acid crystals and/or other additives may be added, if required, right before and/or right after the second plate pasteurizer 10, by means of dose measuring device 10 in preparation tank 9.

Than the vegetable juice can be bottled in bottling unit 12, and the bottles can be capsuled in capsuling unit 13. As desired the vegetable juice may also be deepfrozen and/or stored in bulk and/or bottled otherwise.

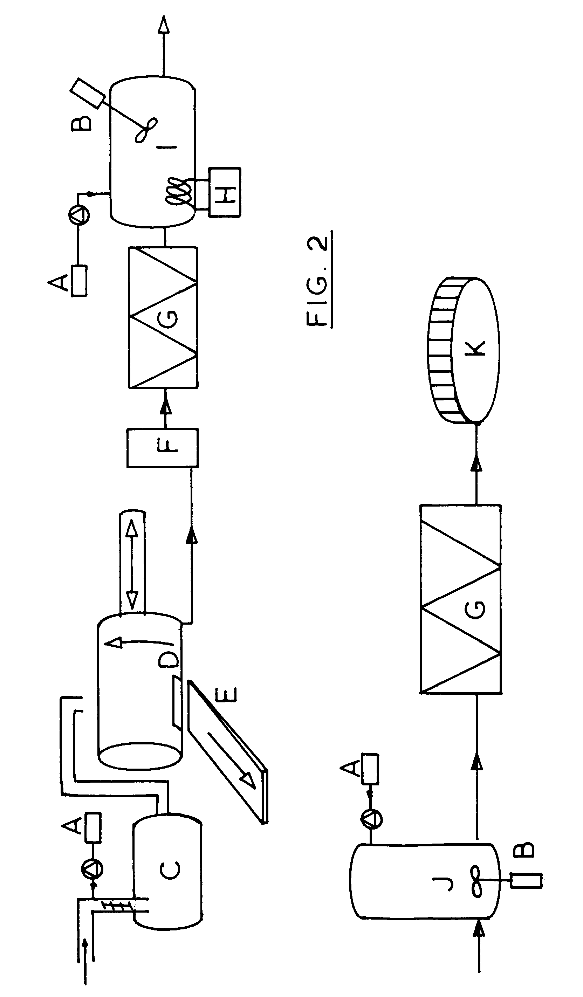

Figure 2 shows a schematic set-up of a process installation for the production of carrot juice from carrot steam peelings, using the method according to the invention. Dose measuring device A adds a pH reducing additive to the carrot steam peelings, which have been refined if so required, in pulp buffer tank C. This mixture is then fed to pulp/juice separation unit D. This unit may consist of e.g. a squeezing and/or decantation and/or centrifugation and/or other separation unit. A dry pulp removal device E has been provided at the bottom of this separation unit. This method makes it possible to obtain from the residue a surprisingly high yield in carrot juice which however is not yet suitable for human consumption. Furthermore it turns out that the residual product, which is removed from separator D, has a relatively high dry matter content of approximately 15% or more, which makes it perfectly suitable to be sold to the fodder industry.
The carrot juice thus obtained, which is still slightly impure, now first passes dirt cyclone F. The purified carrot juice is then fed to first pasteurizer G. Thereupon, in the storage tank I, additives from dose measuring device A are supplied to the carrot juice, mixed by stirring device B and cooled by heat exchanger H. It is then fed to mixing tank J, which is also equipped with a dose measuring device A and a stirring device B. After the carrot juice has thus been dosed with the required nutrients, flavourings and preservatives, it passes through the second pasteurizer G. Subsequently it may be bottled and capsuled in bottling unit K.

It is noted that the purpose of the method and the installation is to provide a novel way to convert peelings and the like, which up to now are not used to extract therefrom vegetable juice, into vegetable juice suitable for human consumption.

However, the method and the installation according to the invention also make it possible to obtain a maximum yield in vegetable juice from entirely unpeeled vegetables, since in that case the favourable end result achieved is the same as is achieved according to the invention with e.g. steam peeling. For an expert, it goes without saying that an end result achieved in the same manner out of an entirely unpeeled vegetable may also be covered by this invention.

The squeezing system selected for the implementation of the method is already known as such for the squeezing of very juicy fruits. Never before has even the slightest idea been suggested to connect such a fruit squeezing system in any way with 'recovering' vegetable juice left in vegetable peelings, since the extent of that recoverability has always been deemed absolutely impossible, and the customary squeezing methods have always been considered sufficient. It is the merit of this invention that now for the first time a successful result has been obtained to realize those recoverable large quantities of vegetable juice from waste. Simultaneously such solidity is rendered to the remaining residue that it can be used as directly administrable fodder, all this without undue and inadmissible strains on the environment as a result of seasonal production.
With regard to the special squeezing systems for this new purpose, a straining band squeezing system and/or a decantation system and/or a centrifugation system may be used as well. None of these systems have ever been deemed applicable for processing peelings or the like.

## Claims

1. Method for extracting vegetable juices, particularly from vegetable peelings or similar vegetable juice containing vegetable remnants, such as pulp and steam peelings, of which the dry matter content is relatively low, e.g. less than approx. 10%, while the vegetable juice content is many -times larger, characterized in that the following processing stages have to be carried out, viz.:
a. grinding and/or shredding (if required) of the vegetable remnants and/or the separated vegetable pulp parts with low dry matter content;
b. adding (if required) a pH reducing additive;
c. separating the vegetable juice from the vegetable residue, particularly the residue obtained by steam peeling vegetables. Which, surprisingly, produces a significantly higher yield in vegetable juice perfectly suitable for human consumption;
d. alternatively removing (if required) sand elements or other undesired residual components from the vegetable juice;
e. dosing one or more additives to the vegetable juice;
f. conditioning the squeezed out vegetable juice and/or the juice containing vegetable remnants, consisting of pasteurization and/or pH reduction;
g. bottling and/or deepfreezing and/or bulk storing the vegetable juice obtained;
h. removing the relatively dry residual product which has formed during the separation stage.

2. Installation to implement the method according to claim 1, characterized in that in a combination a number of processing stations have been provided, comprising:
a. first mechanical means for grinding and/or shredding the vegetable juice containing vegetable remnants or the vegetable pulp parts with low dry matter content [if the fineness of the vegetable remnants should make this advisable];
b. second mechanical means for the addition of pH reducing additives to the vegetable remnants;
c. third mechanical means for separating the vegetable juice from the vegetable residue to extract the vegetable juices;
d. [if the composition of the juice obtained should make this advisable,] fourth mechanical means for the removal of sand or other useless residual components from the vegetable juice;
e. fifth mechanical means for the addition of the required additives;
f. sixth mechanical means for the conditioning of the squeezed out vegetable juice and/or the juice containing vegetable remnants, consisting of pasteurization and/or pH reduction;
g. seventh mechanical means for bottling and/or deepfreezing and/or bulk storage of the vegetable juice obtained;
h. eighth mechanical means for the removal of the relatively dry residual product which has formed during the separation stage.

3. Installation in accordance with claim 2, with the characteristic feature that the processing station under a. consists of an in itself familiar shredding and/or grinding unit.

4. Installation in accordance with claim 2, with the characteristic feature that the processing station under b. consists of an in itself familiar dose measuring device.

5. Installation in accordance with claim 2, with the characteristic feature that the processing station under c., for the separation of the vegetable juice from the vegetable residue, consists of an in itself familiar separation system such as a squeezing system and/or a straining band squeezing system and/or decantation system and/or centrifugation system.

6. Installation in accordance with claim 2, with the characteristic feature that the processing station under d. consists of an in itself familiar sand and/or dirt cyclone.

7. Installation in accordance with claim 2, with the characteristic feature that the processing station under e. consists of at least one in itself familiar dose measuring device.

8. Installation in accordance with claim 2, with the characteristic feature that the processing station under f. consists of an in itself familiar conditioning unit for pasteurization and/or pH reduction.

9. Installation in accordance with claim 2, with the characteristic feature that the processing station under g. consists of an in itself familiar bottling unit and/or deepfreeze unit and/or bulk storage unit.

10. Installation in accordance with claim 2, with the characteristic feature that the processing station under h. consists of an in itself familiar release device for releasing the relatively dry residual product from the separation system.

11. Installation in accordance with claim 2, with the characteristic feature that the processing stations under e and f. are equipped with a dose measuring device for one or more additives.

12. Installation in accordance with claim 2, with the characteristic feature that the processing station under f. is equipped with a pasteurizer.

13. Vegetable juice, obtained from vegetable residue and/or vegetable remnants residue, whether pretreated or not, by means of the method and installation in accordance with one of the foregoing claims 1-12.

## Patentansprüche

1. Methode zur Gewinnung von Gemüsesäften, insbesondere aus Gemüseschalen oder ähnlichen, safthaltigen Gemüseresten, wie Gemüsefruchtfleisch und dampfgeschältem Gemüse, deren Trockenmassegehalt relativ niedrig ist, z.B. niedriger als ungefähr 10 %, wohingegen der Gemüsesaftgehalt um ein Vielfaches höher ist, gekennzeichnet dadurch, dass folgende Verarbeitungsetappen ausgeführt werden müssen:
a. Mahlen und/oder Schnetzeln (falls erforderlich) der Gemüsereste und/oder der zerteilten Gemüsefruchtfleischstücke mit niedrigem Trockenmassegehalt;
b. Hinzufügen (falls erforderlich) eines pH-reduzierenden Zusatzstoffes;
c. Trennen des Gemüsesaftes von den Gemüseresten, insbesondere die Reste, die durch Dampfschälen von Gemüse erhalten wurden. Die, erstaunlicherweise, einen bedeutend höheren Gemüsesaftertrag ergeben, der perfekt für den menschlichen Verzehr geeignet ist;
d. Alternativ, Entfernen (falls erforderlich) von Sandteilchen oder anderen unerwünschten Restbestandteilen aus dem Gemüsesaft;
e. Dosierung und Hinzufügen zum Saft eines oder mehrerer Zusatzstoffe;
f. Konditionierung des gepressten Gemüsesaftes und/oder der safthaltigen Gemüsereste, bestehend aus Pasteurisierung und/oder pH-Reduzierung;
g. Abfüllen und/oder Tiefgefrieren und/oder lose Lagerung des erhaltenen Saftes;
h. Entfernen des relativ trockenen Restproduktes, das sich während des Trennprozesses gebildet hat.

2. Vorrichtung zur Durchführung der Methode gemäß Anspruch 1, gekennzeichnet durch die Kombination einer Reihe von Verarbeitungsetappen, die vorgesehen wurden und folgendes umfassen:
a. Erstens, mechanische Mittel zum Mahlen und/oder Schnetzeln der safthaltigen Gemüsereste oder Gemüsefruchtfleischstücke mit einem niedrigen Trockenmassegehalt (falls dies aufgrund der Feinheit der Gemüsereste ratsam scheint);
b. Zweitens, mechanische Mittel für das Hinzufügen zu den Gemüseresten von pH-reduzierenden Zusatzstoffen,
c. Drittens, mechanische Mittel zur Trennung des Gemüsesaftes von den Gemüseresten zur Gewinnung von Gemüsesäften;
d. (falls es aufgrund der Zusammensetzung des erhaltenen Gemüsesaftes ratsam scheint), viertens, mechanische Mittel zur Entfernung von Sand oder anderen unbrauchbaren, Restbestandteilen aus dem Gemüsesaft;
e. Fünftens, mechanische Mittel zum Hinzufügen der erforderlichen Zusatzstoffe;
f. Sechstens, mechanische Mittel zur Konditionierung des ausgepressten Gemüsesaftes und/oder des in den Gemüsesäften enthaltenen Saftes, bestehend aus der Pasteurisierung und/oder pH-Reduzierung;
g. Siebtens, mechanische Mittel zum Abfüllen und/oder Tiefgefrieren und/oder losen Lagerung des erhaltenen Saftes;
h. Achtens, mechanische Mittel zur Entfernung des relativ trockenen
Restproduktes, das sich während des Trennprozesses gebildet hat.

3. Vorrichtung gemäß Anspruch 2, mit dem charakteristischen Merkmal, dass die Verarbeitungsetappe unter a. aus einer für sich allein geläufigen Einheit zum Mahlen und/oder Schnetzeln besteht.

4. Vorrichtung gemäß Anspruch 2, mit dem charakteristischen Merkmal, dass die Verarbeitungsetappe unter b. aus einem für sich allein geläufigen Dosierungsgerät besteht.

5. Vorrichtung gemäß Anspruch 2, mit dem charakteristischen Merkmal, dass die Verarbeitungsetappe unter c. zur Trennung des Gemüsesaftes von den Gemüseresten aus einem für sich allein geläufigen System besteht, wie z.B. einem Auspresssystem und/oder einem Bandfiltrierpresssystem und/oder einem Zentrifugalsystem.

6. Vorrichtung gemäß Anspruch 2, mit dem charakteristischen Merkmal, dass die Verarbeitungsetappe unter d. aus einem für sich allein geläufigen Sand- und/oder Schmutz-Zyklon besteht.

7. Vorrichtung gemäß Anspruch 2, mit dem charakteristischen Merkmal, dass die Verarbeitungsetappe unter e. aus mindestens einem für sich allein geläufigen Dosierungsmessgerät besteht.

8. Vorrichtung gemäß Anspruch 2, mit dem charakteristischen Merkmal, dass die Verarbeitungsetappe unter f. aus einer für sich allein geläufigen Konditionierungseinheit zur Pasteurisierung und/oder pH-Reduzierung besteht.

9. Vorrichtung gemäß Anspruch 2, mit dem charakteristischen Merkmal, dass die Verarbeitungsetappe unter g. aus einer für sich allein geläufigen Abfüll- und/oder Tiefkühleinheit und/oder einer Einheit zur losen Lagerung besteht.

10. Vorrichtung gemäß Anspruch 2, mit dem charakteristischen Merkmal, dass die Verarbeitungsetappe unter h. aus einer für sich allein geläufigen Entfernvorrichtung zur Entfernung des relativ trockenen Restproduktes aus dem Trennsystem besteht.

11. Vorrichtung gemäß Anspruch 2, mit dem charakteristischen Merkmal, dass die Verarbeitungsetappen unter e. und f. mit Dosierungsmesseinheiten für ein oder mehrere Zusatzstoffe ausgestattet sind.

12. Vorrichtung gemäß Anspruch 2, mit dem charakteristischen Merkmal, dass die Verarbeitungsetappe unter f. mit einem Pasteurisierer ausgestattet ist.

13. Gemüsesaft, den man aus Gemüse und/oder Gemüseresten erhält, vorbehandelt oder nicht, mittels der Methode und Vorrichtung gemäß einem der vorhergehenden Ansprüche 1-12.

## Revendications

1. Méthode destinée à produire du jus à partir d'épluchures de légumes ou encore du jus de légumes comprenant des résidus de légumes tels que de la pulpe ou des restants de cuisson à l'étuvée, et présentant une teneur en matières sèches relativement faible, inférieure à 10 % environ, pour une teneur en jus de légumes bien plus importante, et caractérisée par les étapes suivantes, à savoir :
a. broyage et / ou réduction (si nécessaire) des résidus de légumes et / ou de la pulpe des légumes présentant une faible teneur en matières sèches;
b. ajout (si nécessaire) d'un additif destiné à réduire le pH;
c. séparation du jus de légumes et des résidus de légumes, en particulier ceux résultant de la cuisson à l'étuvée. De manière assez surprenante, cette dernière permet une production bien plus importante de jus de légumes parfaitement propres à la consommation;
d. suppression (si nécessaire) des éléments sableux ou autres résidus indésirés, en alternance;
e. ajout d'un ou plusieurs additifs, dans des proportions judicieuses;
f. conditionnement du jus de légumes extrait et/ou du jus contenant des résidus de légumes, par pasteurisation et/ou réduction du pH;
g. mise en bouteilles et / ou congélation et / ou stockage massif du jus de légumes obtenu:
h. suppression du produit résiduel relativement sec qui s'est formé pendant la phase de séparation.

2. Installation destinée à implémenter la méthode conforme à la revendication 1, caractérisée par certaines étapes de traitement, à savoir :
a. premier traitement mécanique pour broyer et / ou réduire le jus de légumes contenant des résidus de légumes ou de la pulpe à faible teneur en matières sèches [si la taille des résidus de légumes le recommande);
b. second traitement mécanique afin d'ajouter aux résidus de légumes des additifs en vue de réduire le pH;
c. troisième traitement nécanique pour séparer le jus de légumes des résidus de légumes en vue d'extraire les jus de légumes;
d. [si la composition du jus le recommande], quatrième traitement mécanique afin de supprimer du jus de légumes le sable ou d'autres résidus inutiles;
e. cinquième traitement mécanique afin d'ajouter les additfis requis:
f. sixième traitement mécanique afin de conditionner le jus de légumes extrait et / ou le jus contenant des résidus de légumes, par pasteurisation et / ou réduction du pH:
g. septième traitement mécanique destiné à la mise en bouteilles et / ou à la congélation et / ou au stockage en vrac du jus de légumes obtenu;
h. huitième traitement mécanique destiné à suppromer le produit résiduel relativement sec qui s'est formé pendant la phase de séparation.

3. Installation selon la revendication 2, caractérisée en ce que la station de traitement sous a. consiste en une unité de réduction et / ou de broyage conviviale.

4. Installation selon la revendication 2, caractérisée en ce que la station de traitement sous b consiste en un instrument de dosage convivial.

5. Installation selon la revendication 2, caractérisée en ce que la station de traitement sous c destinée à séparer le jus de légumes des résidus de légumes consiste en un système de séparation convivial tel que un système d'extraction et / ou un système d'extraction avec bande d'égouttage et / ou un système de décantation et / ou un système de centrifugation.

6. Installation selon la revendication 2, caractérisée en ce que la station de traitement sous d consiste en un cyclone pour sable et / ou autres impuretés.

7. Installation selon la revendication 2, caractérisée en ce que la station de traitement sous e consiste en au moins un instrument de dosage convivial.

8. Installation selon la revendication 2, caractérisée en ce que la station de traitement sous f consiste en une unité de conditionnement conviviale destinée à la pasteurisation et / ou la réduction du pH.

9. Installation selon la revendication 2, caractérisée en ce que la station de traitement sous g consiste en une unité de mise en bouteilles et / ou de congélation et / ou de stockage en vrac conviviale.

10. Installation selon la revendication 2, caractérisée en ce que la station de traitement sous h consiste en un instrument d'évacuation du produit résiduel relativement sec du système de séparation.

11. Installation selon la revendication 2, caractérisée en ce que les stations de traitement sous e et f sont équipées d'un instrument de dosage pour un ou plusieurs additifs.

12. Installation selon la revendication 2, caractérisée en ce que la station de traitement sous f est équipée d'un appareillage de pasteurisation.

13. Jus de légumes extrait de résidus de légumes et / ou de résidus de déchets de légumes prétraités ou non, grâce à la méthode et à l'installation conforme à l'une ou l'autre des revendications précédentes 1 à 12.
